# EUROPEAN PATENT APPLICATION

(11) **EP 4 851 512 A1**
(43) Date of publication of application: **09.12.2026**
(21) Application number: 25748624.1
(22) Date of filing: 28.01.2025
(51) Int. Cl.: F16L 27/10, B29C 48/13, B29C 48/90, B29C 53/30, F16L 11/11, F16L 21/03, F16L 47/08, F16L 51/03

(54) **JOINT PIPE AND METHOD FOR MANUFACTURING JOINT PIPE**

(30) Priority: 30.01.2024 JP 2024011997
(71) Applicant: Sanoh Industrial Co., Ltd., Koga-shi, Ibaraki 306-0041 (JP)
(72) Inventor: SHINBO, Takaya, Koga-shi, Ibaraki 306-0041 (JP)
(74) Representative: dompatent
(86) International application number: PCT/JP2025/002606
(87) International publication number: WO 2025/164620

(57) **Abstract**

A joint pipe includes: a bellows pipe having a structure of repeated mountain and valley folds; an annular groove formed in an inner peripheral wall of the bellows pipe; and an O-ring attached to the annular groove and sealing a fluid flowing in from a cylindrical pipe member connected to the bellows pipe.

## Description

### Technical Field

The present disclosure relates to a joint pipe and a method of manufacturing a joint pipe.

### Background Art

Japanese Patent No. 5224357 discloses a pipe joint having a spiral groove continuously formed on an inner surface and a method of manufacturing a pipe joint, in which a corrugated pipe is screwed and connected from an end portion of the pipe joint.

### SUMMARY OF INVENTION

However, in the method of screwing and connecting the corrugated pipe disclosed in Japanese Patent No. 5224357, connection work is troublesome, and it is necessary to attach a sealing sheet to the inner peripheral surface of the joint pipe in order to secure the sealability, which is troublesome.

In the pipe joint having a spiral groove, there is room for improvement in allowance of axial movement of a corrugated pipe (pipe body) connected to the pipe joint and followability to axial displacement.

The disclosure facilitates connection work and sealing work, allows the axial movement of a pipe member with respect to a joint pipe, and improves followability of axial displacement of the pipe member.

### Solution to Problem

A joint pipe of a first aspect of the disclosure includes: a bellows pipe having a structure of repeated mountain and valley folds; an annular groove formed in an inner peripheral wall of the bellows pipe; and an O-ring attached to the annular groove and sealing a fluid flowing in from a cylindrical pipe member connected to the bellows pipe.

In the joint pipe of the first aspect, since the joint pipe is configured as a bellows pipe, it is possible to allow the axial movement of the connected pipe member and follow the axial displacement between the joint pipe and the pipe member.

The connection work is completed only by inserting the cylindrical pipe member into the joint pipe, and the sealability is secured by the O-ring attached to the annular groove.

A joint pipe of a second aspect is the joint pipe of the first aspect, in which a valley fold portion of an insertion port of the bellows pipe expands in a radial direction.

In the joint pipe of the second aspect, by expanding the valley fold portion of the insertion port of the bellows pipe in the radial direction, the expanded portion becomes an inclined guide surface, the pipe member is easily connected to the joint pipe, and the O-ring is easily attached to the inside of the joint pipe.

A joint pipe of a third aspect is the joint pipe of the first aspect or the second aspect, in which a plurality of the joint pipes are connected in series as a flow path through which a coolant for cooling flows.

In the joint pipe of the third aspect, since the plurality of the joint pipes are connected in series and the plurality of joint pipes constitute a flow path, a degree of freedom in designing a cooling circuit including the joint pipe is increased as compared with a configuration in which a single joint pipe is set.

A method of manufacturing a joint pipe of a fourth aspect includes: sandwiching a softened tube from both sides with a mold block having recesses and protrusions formed therein; and vacuum-drawing an outer peripheral surface of the tube from an air hole formed in the mold block to form a bellows pipe having a structure of repeated mountain and valley folds and an annular groove in an inner peripheral wall of the bellows pipe.

In the method of manufacturing a joint pipe of the fourth aspect, a joint pipe having no parting line on the inner peripheral wall can be manufactured by molding a softened tube with a mold block having recesses and protrusions.

A method of manufacturing a joint pipe of a fifth aspect is the method of manufacturing a joint pipe of the fourth aspect, in which an elongated bellows pipe is molded and then cut into a bellows pipe having a required length.

In the method of manufacturing a joint pipe of the fifth aspect, the manufacturing cost can be reduced as compared with a method of manufacturing bellows pipes of a required length one by one.

A method of manufacturing a joint pipe of a sixth aspect is the method of manufacturing a joint pipe of the fourth aspect or the fifth aspect, in which the tube is made of a resin.

In the method of manufacturing a joint pipe of the sixth aspect, predetermined flexibility and stretchability can be realized.

### Advantageous Effects of Invention

According to the disclosure, it is possible to facilitate connection work and sealing work, to allow the axial movement of a pipe member with respect to a joint pipe, and to follow the axial displacement of the pipe member.

### BRIEF DESCRIPTION OF DRAWINGS

Fig. 1 is a top perspective view of a cooling system including a joint pipe of the disclosure.
Fig. 2 is a partial cross-sectional view of Fig. 1.
Fig. 3A is a plan view of Fig. 1.
Fig. 3B is a partial cross-sectional view of Fig. 3A.
Fig. 4 is a cross-sectional view of the joint pipe of the disclosure.
Fig. 5 is a plan cross-sectional view illustrating a method of manufacturing a joint pipe of the disclosure.
Fig. 6(A) is a plan cross-sectional view of an elongated bellows pipe cut at a cutting position, Fig. 6(B) is a plan cross-sectional view of a bellows pipe in a case in which the elongated bellows pipe is cut at a first molding position, and Fig. 6(C) is a plan cross-sectional view of a bellows pipe in a case in which the elongated bellows pipe is cut at a second molding position.

### DESCRIPTION OF EMBODIMENTS

Hereinafter, modes for carrying out the disclosure will be described with reference to the drawings. In the drawings, components denoted by the same reference numerals mean the same or similar components. Overlapping descriptions and reference numerals in the embodiments described below may be omitted. The drawings used in the following description are all schematic, and dimensional relationships of respective elements, ratios of respective elements, and the like illustrated in the drawings do not necessarily coincide with actual ones. Dimensional relationships of the respective elements, ratios of the respective elements, and the like do not necessarily coincide among a plurality of drawings.

An example of a joint pipe of this embodiment will be described with reference to the drawings. The H direction means the vertical direction for convenience, the W direction means the width direction for convenience, and the D direction means the depth direction for convenience. The H direction, the W direction, and the D direction are orthogonal to each other. In this specification, the description will be made using the above directions, but the posture of the joint pipe is not limited to these directions.

### (Configuration of Cooling System)

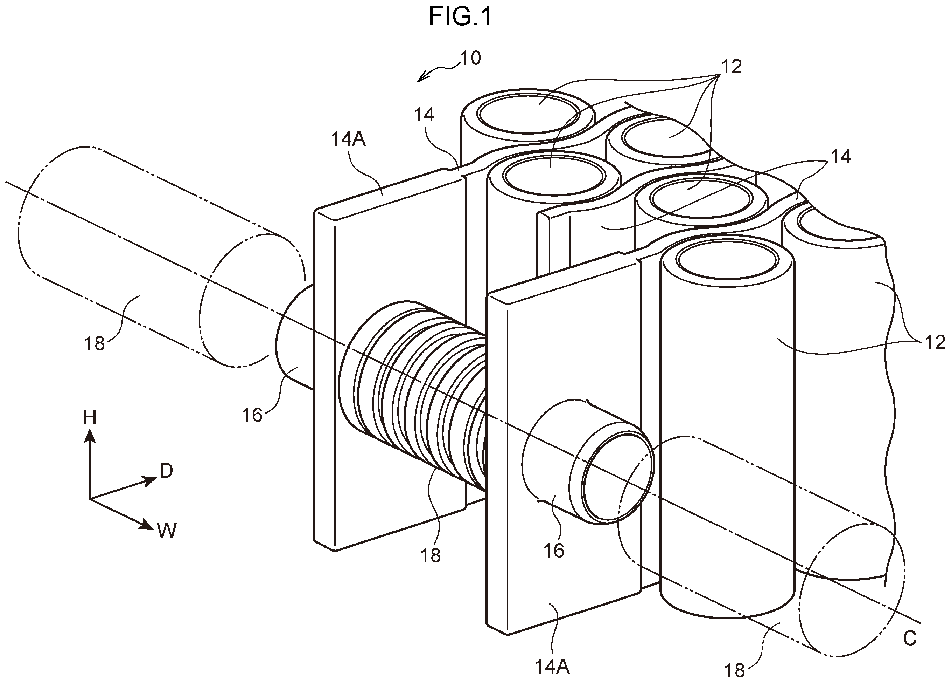

As illustrated in Fig. 1, a cooling system 10 includes battery packs 12, cooling plates 14, pipes 16, and a joint pipe 18. The cooling system 10 cools the battery packs 12.

The battery packs 12 have a columnar shape, and are arranged apart from each other in the width direction in a state of being arranged in the depth direction. The battery pack 12 supplies power to, for example, an electronic component (not illustrated).

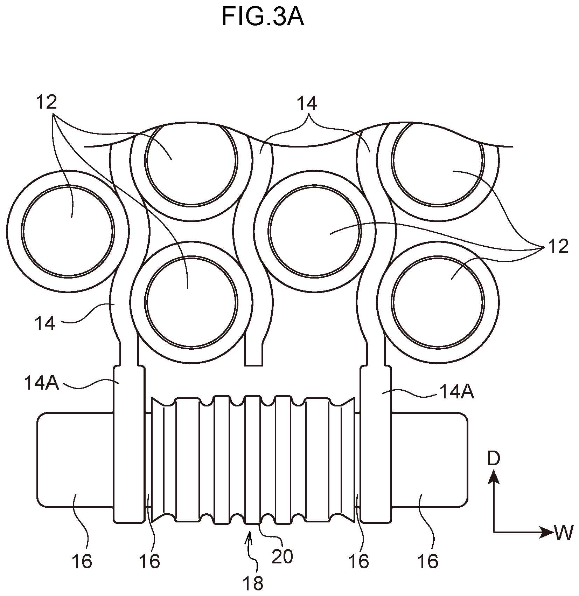

As illustrated in Fig. 3(A), the cooling plate 14 is formed in a wave shape in plan view, and a plurality of cooling plates are arranged in the width direction. The cooling plate 14 is formed in a hollow shape. A coolant (that is, cooling water) for cooling flows inside the cooling plate 14 by a pump (not illustrated). The coolant for cooling is an example of a fluid. The cooling plate 14 radiates heat from the battery pack 12 while being in contact with the side surface of the battery pack 12. The cooling plate 14 is made of a metal having a relatively high thermal conductivity, for example, aluminum.

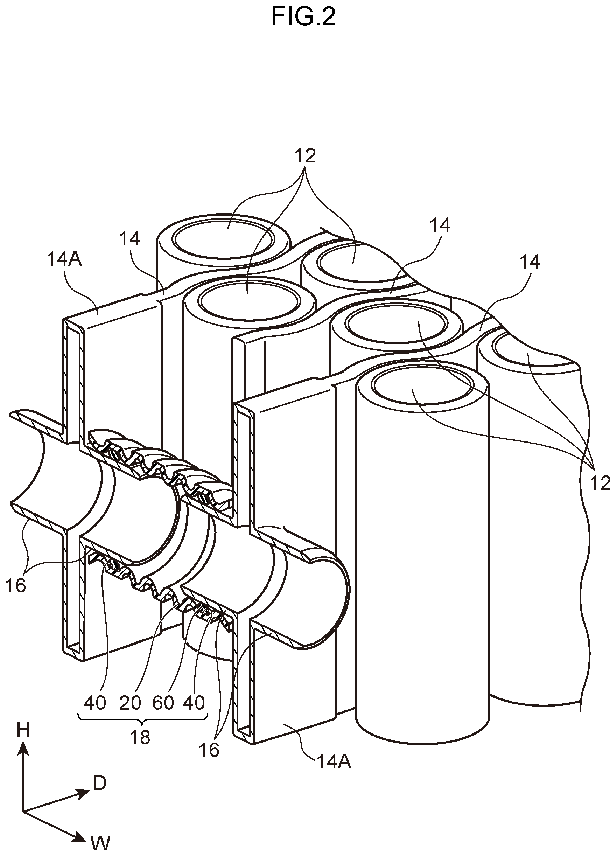

As illustrated in Fig. 2, a part of the cooling plate 14 has a box-shaped portion 14A at the front end in the depth direction. The box-shaped portion 14A is formed in a hollow shape. A coolant for cooling flows inside the box-shaped portion 14A by a pump (not illustrated). As illustrated in Fig. 1, a plurality of joint pipes 18 described later are arranged on both side surfaces of the box-shaped portion 14A in the width direction.

As illustrated in Fig. 2, the pipes 16 have a cylindrical shape, and extend in a pair of opposite directions from both side surfaces of the box-shaped portion 14A in the width direction. That is, the pipe 16 is cantilevered by the box-shaped portion 14A. The pipe 16 communicates with the inside of the box-shaped portion 14A, and functions as a flow path through which cooling water flows to a plurality of box-shaped portions 14A. The pipe 16 is disposed at a vertically central portion of each box-shaped portion 14A. The pipe 16 is an example of a pipe member. The pipe 16 in one box-shaped portion 14A and the pipe 16 in the other box-shaped portion 14A facing the one box-shaped portion 14A are arranged in a state of being separated from each other in the width direction.

### (Configuration of Joint Pipe)

As illustrated in Figs. 1 and 2, the joint pipe 18 is disposed along the width direction and has a tubular shape whose center is C. The joint pipe 18 connects a pair of pipes 16 spaced apart in the width direction and facing each other. In this embodiment, as illustrated in Fig. 1, a plurality of joint pipes 18 are connected in series along the center C (for example, in the width direction). The joint pipe 18 includes a bellows pipe 20, an annular groove 40, and an O-ring 60.

### <Bellows Pipe>

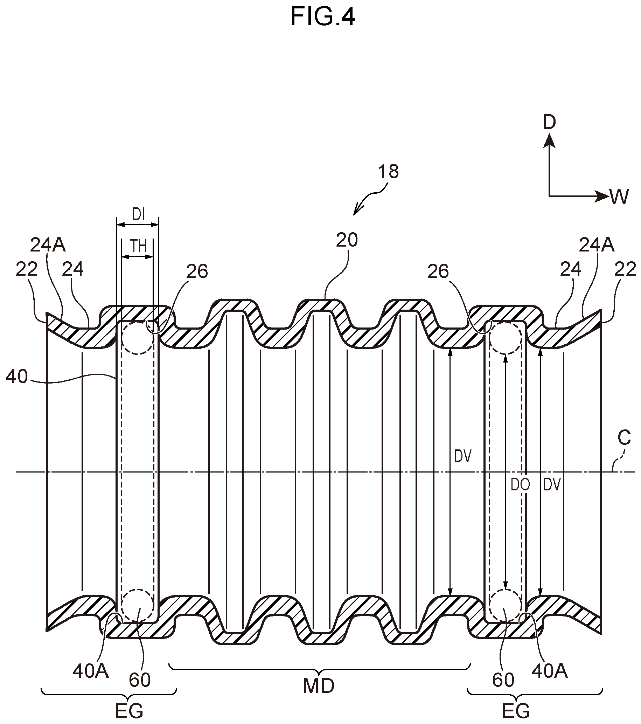

As illustrated in Fig. 1, the bellows pipe 20 is a bellows-shaped pipe extending in the width direction and having a center at C. Specifically, in Fig. 4, the bellows pipe 20 has a structure of repeated mountain and valley folds in the depth direction. Specifically, the bellows pipe 20 has a central portion MD of repeated mountain and valley folds regularly, and an end portion side portion EG of repeated mountain and valley folds irregularly as compared with the central portion MD. The bellows pipe 20 is stretchable in the width direction. In this embodiment, the bellows pipe 20 has three mountain fold portions and four valley fold portions in a central portion MD in the width direction, and one mountain fold portion and one valley fold portion in each of the two end portion side portions EG. The top of any mountain fold portion is flat along the width direction. The connecting portions of mountain folds and valley folds are all inclined.

A tapered portion 24A extending in the radial direction from a valley fold portion 24 is formed in an end portion side portion EG of the bellows pipe 20 in the width direction. The opening end of the tapered portion 24A is an insertion port 22 and constitutes both ends of the bellows pipe 20. In the bellows pipe 20, one insertion port 22 can be offset in the depth direction (that is, axially displaced) with respect to the other insertion port 22. The bellows pipe 20 separates the pipes 16 in the width direction in a state where the pipes 16 are inserted from the insertion ports 22 at both ends.

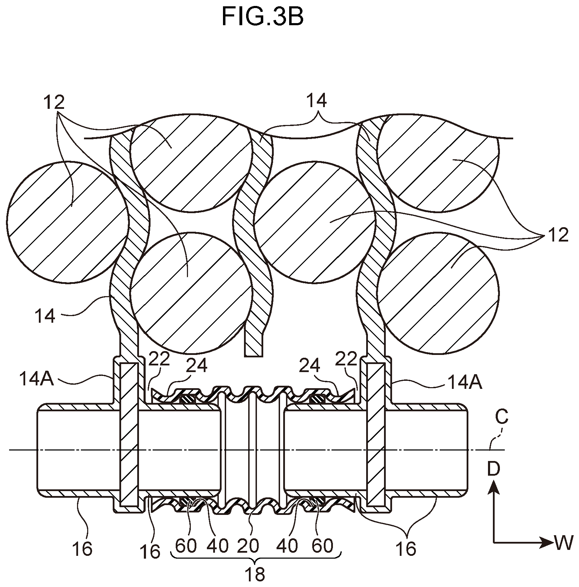

The inner diameter of the bellows pipe 20, more specifically, an inner diameter DV (see Fig. 4) of the valley fold portion of the bellows pipe 20 is formed to be larger than the outer diameter of the pipe 16 as illustrated in Fig. 3(B). The bellows pipe 20 is connected to the outer peripheral side of the pipe 16.

### <Annular Groove>

As illustrated in Fig. 4, the annular groove 40 is a groove which is formed on the inner peripheral wall 26 of the bellows pipe 20 on the opening end side and has a center at C. The annular groove 40 has a rectangular shape as viewed in a plane cross section. Specifically, the annular groove 40 is formed on the end portion side portion EG on the opening end portion side with respect to the central portion MD of the bellows pipe 20, which is on the mountain fold portion side with respect to the tapered portion 24A. In this embodiment, a pair of annular grooves 40 is formed in the bellows pipe 20. The annular groove 40 has a depth that accommodates the center of the O-ring 60 described later therein.

A bottom portion 40A of the annular groove 40 forms a cylindrical surface. Both side surfaces of the annular groove 40 in the width direction face each other with a distance DI therebetween. The mountain fold portion of the outer peripheral surface located on the back side of the bottom portion 40A of the annular groove 40 has a convex shape closer to the center C than the mountain fold portion of the central portion MD of the bellows pipe 20. That is, the three mountain fold portions in the central portion MD further protrude in the radial direction as compared with the mountain fold portion of the end portion side portion EG.

### <O-Ring>

As illustrated in Fig. 4, the O-ring 60 is an annular body attached to the annular groove 40 and having a center at C. The O-ring 60 seals a coolant for cooling flowing in from the pipe 16 in a state of being pressed between the outer peripheral surface of the pipe 16 and the inner peripheral wall 26 of the bellows pipe 20. The O-ring 60 is made of rubber. In this embodiment, the O-ring 60 is attached to each of the plurality of annular grooves 40.

An inner diameter DO of the O-ring 60 is formed to be smaller than the outer diameter of the pipe 16. In a state where the O-ring 60 is inserted into the outer periphery of the pipe 16, the inner and outer peripheries of the O-ring 60 are elastically deformed and the diameters thereof are expanded. The inner diameter DO of the O-ring 60 is formed to be smaller than the inner diameter DV of the valley fold portion of the bellows pipe 20. A thickness TH of the O-ring 60 in the width direction is formed to be smaller than the distance DI between both side surfaces of the annular groove 40 in the width direction. That is, there is a gap between the O-ring 60 and the annular groove 40 in the width direction.

### (Method of Manufacturing Joint Pipe)

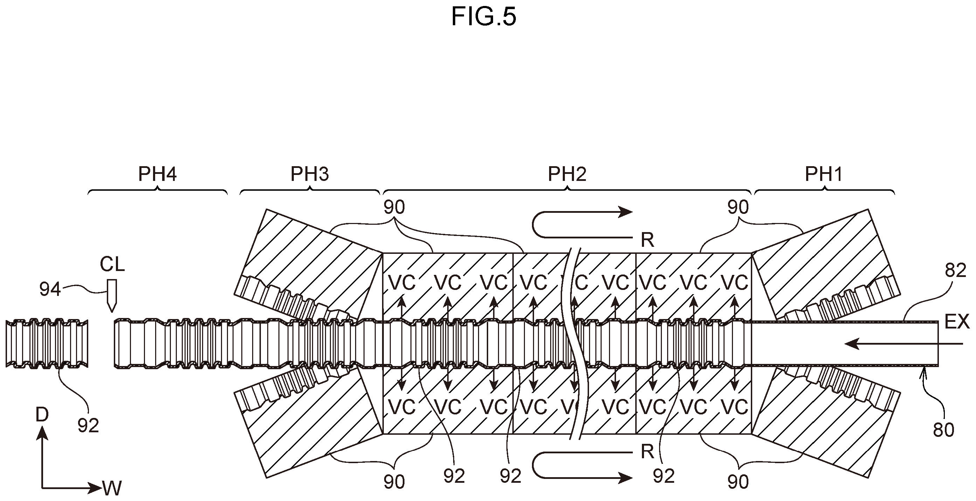

Next, a method of manufacturing the joint pipe 18 will be described. As illustrated in Fig. 5, the joint pipe 18 is manufactured by molding an outer peripheral surface 82 of a tube 80 with a plurality of mold blocks 90. The tube 80 is made of a resin.

In the mold block 90, a plurality of irregularities and a plurality of air holes 92 are formed on a molding surface in contact with the tube 80 described later, and the mold blocks are arranged in pairs so as to face each other from both sides in the depth direction. The plurality of recesses and protrusions are formed in advance in the mold block 90 according to positions corresponding to the bellows pipe 20 and the annular groove 40 in one joint pipe 18. The mold block 90 conveys the tube 80 in a conveyance direction R in a state where a plurality of the mold blocks are connected in a band shape in the width direction. In this embodiment, the plurality of mold blocks 90 form two endless tracks on both sides in the depth direction to convey the tube 80.

The method of manufacturing the joint pipe 18 includes a preparation step, a first step PH1, a second step PH2, a third step PH3, a fourth step PH4, and a finishing step.

In the preparation step (not illustrated), the tube 80 serving as a base material of the joint pipe 18 is prepared. Specifically, the resin softened by heating is extruded into a tube shape from a nozzle (not illustrated) in a discharge direction EX to prepare the tube 80.

In the first step PH1, as illustrated in Fig. 5, the tube 80 is sandwiched between the mold blocks 90. Specifically, the tube 80 is held by the mold blocks 90 from both sides in the depth direction.

In the second step PH2, the outer peripheral surface 82 of the tube 80 is sucked from the air hole 92 to form the outer peripheral surface 82 of the tube 80. Specifically, the outer peripheral surface 82 of the tube 80 is vacuumed from the plurality of air holes 92 to form the bellows pipe 20 and the annular groove 40. In this embodiment, vacuum-drawing is performed via the air holes 92 at a plurality of positions VC for each pair of mold blocks 90.

In the third step PH3, the bellows pipe 20 and the annular groove 40 are cooled, the shapes thereof are fixed, and the mold block 90 is removed.

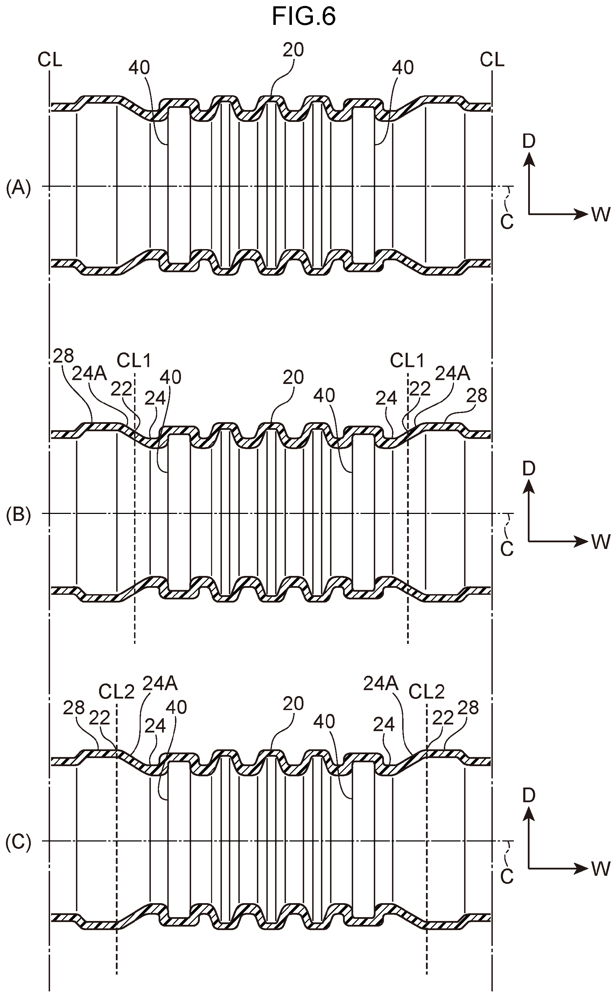

In the fourth step PH4, the cutting is performed at a cutting position CL by a cutter 94 to form the elongated bellows pipe 20. As illustrated in Fig. 6(B), the elongated bellows pipe 20 is positioned on the opposite side of the bellows pipe 20 across the tapered portion 24A and includes a straight pipe portion 28 continuous from the tapered portion 24A.

In the finishing step, as illustrated in Fig. 6(A), the elongated bellows pipe 20 cut at the cutting position CL is cut to a required length. As illustrated in Fig. 6(B) or 6(C), the elongated bellows pipe 20 is cut at a first molding position CL1 or a second molding position CL2 to mold the bellows pipe 20. The first molding position CL1 is a midway position in the width direction of the tapered portion 24A, and the second molding position CL2 is a connection position between the tapered portion 24A and the straight pipe portion 28.

In a case in which the O-ring 60 is attached to the annular groove 40, the joint pipe 18 is completed.

### (Operational Effects)

The joint pipe 18 of this embodiment includes the bellows pipe 20 having a structure of repeated mountain and valley folds, the annular groove 40 formed in the inner peripheral wall 26 of the bellows pipe 20, and the O-ring 60 attached to the annular groove 40 and sealing a coolant for cooling (not illustrated) flowing in from the pipe 16 connected to the bellows pipe 20. Even in a case in which a manufacturing error in the width direction occurs in the pair of pipes 16 respectively connected to the end portion side portion EG of the joint pipe 18, the axial movement of the connected pipe 16 can be permitted by configuring the joint pipe 18 as the bellows pipe 20. Even in a case in which one of the pair of pipes 16 is axially displaced with respect to the other, since the bellows pipe 20 is deformed such that the other insertion port 22 with respect to the one insertion port 22 is axially displaced, it is possible to follow the axial displacement between the joint pipe 18 and the pipe 16. In the joint pipe 18 of this embodiment, connection work is completed only by inserting the pipe 16 into the bellows pipe 20, and the connection is secured by the tightening force of the O-ring 60, and sealability is secured by the O-ring attached to the annular groove 40. Since a known connector is not used for connecting the pipes 16 to each other, the disclosure can be applied to a place having a small mounting space.

In the joint pipe 18 of this embodiment, the valley fold portion 24 of the insertion port 22 of the bellows pipe 20 expands in the radial direction by the tapered portion 24A. By expanding the valley fold portion 24 of the insertion port 22 in the radial direction, the inner surface of the tapered portion 24A becomes an inclined guide surface, the pipe 16 is easily connected to the joint pipe 18, and the O-ring 60 is easily attached into the joint pipe 18.

As illustrated in Fig. 1, the plurality of joint pipes 18 of this embodiment are connected in series as a flow path through which a coolant for cooling flows. According to this configuration, since the plurality of joint pipes 18 are connected in series and the plurality of joint pipes 18 constitute a flow path, a degree of freedom in designing a cooling circuit including the joint pipe 18 is increased as compared with a configuration in which a single joint pipe is set.

In the method of manufacturing the joint pipe 18 of this embodiment, the softened tube 80 is sandwiched from both sides with the mold block 90 having recesses and protrusions formed therein, and the outer peripheral surface 82 of the tube 80 is vacuumed from the air hole 92 to form the bellows pipe 20 and the annular groove 40. According to this configuration, a joint pipe having no parting line on the inner peripheral wall 26 can be manufactured by molding the softened tube 80 with the mold block 90 having recesses and protrusions.

In the method of manufacturing the joint pipe 18 of this embodiment, the elongated bellows pipe 20 is molded and then cut to obtain the bellows pipe 20 having a required length. Specifically, by selecting the first molding position CL1 or the second molding position CL2 and cutting the elongated bellows pipe 20, the manufacturing cost can be reduced as compared with the method of manufacturing bellows pipes of a required length one by one.

In the method of manufacturing the joint pipe 18 of this embodiment, the tube is made of a resin. According to this configuration, predetermined flexibility and stretchability can be realized.

### (Modification)

Although the disclosure has been described in detail with respect to specific embodiments, it will be apparent to those skilled in the art that the disclosure is not limited to the specific embodiments and that the disclosure may take on various other embodiments within the scope of the disclosure.

The bellows pipe 20 has three mountain fold portions and four valley fold portions in a central portion MD in the width direction, and one mountain fold portion and one valley fold portion in each of the two end portion side portions EG, but the disclosure is not limited thereto. Although the inner diameter of the valley fold portion of the bellows pipe 20 is uniformly DV, the disclosure is not limited thereto. In Fig. 4, the inner diameter of at least valley fold portions on both sides in the width direction of the annular groove 40 may be DV.

The annular groove 40 has a rectangular shape as viewed in a plane cross section, but the disclosure is not limited thereto. For example, the annular groove 40 may have an elliptical shape as viewed in a plane cross section.

In the joint pipe 18, the valley fold portion 24 of the insertion port 22 of the bellows pipe 20 expands in the radial direction by the tapered portion 24A, but this configuration is not essential.

The plurality of joint pipes are connected in series as a flow path through which a coolant for cooling flows, but this configuration is not essential. For example, a fluid, a liquid, a powder, a particle, or a gas for other uses may flow through the flow path.

In the method of manufacturing the joint pipe 18, the elongated bellows pipe 20 is molded and then cut to obtain the bellows pipe 20 having a required length, but this configuration is not essential. In the above embodiment, both ends are cut at either one of the first molding position CL1 or the second molding position CL2, but the disclosure is not limited thereto. One end portion of the elongated bellows pipe 20 may be cut at the first molding position CL1 and the other end portion thereof may be cut at the second molding position CL2.

In the method of manufacturing the joint pipe 18, the tube 80 is made of a resin, but this configuration is not essential. The material of the tube 80 can be freely changed within a range in which predetermined flexibility and stretchability can be realized.

The entire contents of the disclosures by Japanese Patent Application No. 2024-011997 filed on January 30, 2024 are incorporated herein by reference. All the literature, patent application, and technical standards cited herein are also herein incorporated to the same extent as provided for specifically and severally with respect to an individual literature, patent application, and technical standard to the effect that the same should be so incorporated by reference.

## Claims

1. A joint pipe, comprising:
a bellows pipe having a structure of repeated mountain and valley folds;
an annular groove formed in an inner peripheral wall of the bellows pipe; and
an O-ring attached to the annular groove and sealing a fluid flowing in from a cylindrical pipe member connected to the bellows pipe.

2. The joint pipe according to claim 1, wherein a valley fold portion of an insertion port of the bellows pipe expands in a radial direction.

3. The joint pipe according to claim 1, wherein a plurality of the joint pipes are connected in series as a flow path through which a coolant for cooling flows.

4. A method of manufacturing a joint pipe, the method comprising:
sandwiching a softened tube from both sides with a mold block having recesses and protrusions formed therein; and
vacuum-drawing an outer peripheral surface of the tube from an air hole formed in the mold block to form a bellows pipe having a structure of repeated mountain and valley folds and an annular groove in an inner peripheral wall of the bellows pipe.

5. The method of manufacturing a joint pipe according to claim 4, wherein an elongated bellows pipe is molded and then cut into a bellows pipe having a required length.

6. The method of manufacturing a joint pipe according to claim 4, wherein the tube is made of a resin.
